# EUROPÄISCHE PATENTSCHRIFT

(11) **EP 4 091 919 B1**
(45) Veröffentlichungstag und Bekanntmachung des Hinweises auf die Patenterteilung: **25.09.2024**
(21) Anmeldenummer: 22171622.8
(22) Anmeldetag: 04.05.2022
(51) Int. Cl.: B62D 33/04, B29C 65/18, B29C 65/48, B29C 65/00, B29C 67/00

(54) **GEWICHTSOPTIMIERTER KOFFERAUFBAU FÜR NUTZFAHRZEUGE SOWIE VERFAHREN ZU SEINER HERSTELLUNG**
WEIGHT-OPTIMIZED CASE STRUCTURE FOR COMMERCIAL VEHICLES AND METHOD FOR ITS MANUFACTURE
STRUCTURE DE COFFRE AYANT UN POIDS OPTIMISÉ POUR VÉHICULES UTILITAIRES, AINSI QUE SON PROCÉDÉ DE FABRICATION

(30) Priorität: 21.05.2021 DE 102021113321; 05.01.2022 DE 102022100219
(43) Veröffentlichungstag der Anmeldung: 23.11.2022
(73) Patentinhaber: Sommer GmbH, 06636 Laucha an der Unstrut (DE)
(72) Erfinder: Tietje, Alexander, 96269 Großheirath (DE)
(74) Vertreter: Weickmann & Weickmann PartmbB

(56) Entgegenhaltungen:
- EP-A1- 2 423 081
- EP-A1- 3 640 124
- WO-A1-01/19603
- BE-A3- 1 017 736
- CN-A- 106 428 248
- DE-C2- 10 005 737
- DE-U1- 202020 105 789
- DE-U1- 202020 105 789
- GB-A- 2 391 841
- US-A- 5 965 238
- US-A1- 2010 015 392
- US-A1- 2015 102 631
- US-B2- 10 399 296

## Beschreibung

### I. Anwendungsgebiet

Die Erfindung betrifft Nutzfahrzeuge, insbesondere kleinere Nutzfahrzeuge bis etwa 3,5 t Gesamtgewicht, und insbesondere den Kofferaufbau für solche Nutzfahrzeuge.

Unter einem Kofferaufbau wird ein eigenstabiler Aufbau aus plattenartigen Elementen verstanden, im Gegensatz zu Aufbauten, die teilweise nur aus Folien bestehend, insbesondere im Wandbereich.

Im Vorliegenden Fall umfasst der Kofferaufbau auch den Innenausbau oder zumindest Teile des Innenausbaus, insbesondere Regale, Zwischenwände, Schranksysteme, Eintrittskästen oder Radkästen.

### II. Technischer Hintergrund

Gerade bei kleineren Nutzfahrzeugen ist das Verhältnis von Nutzlast zu Gesamtgewicht nicht allzu groß, sodass immer versucht wird, die Nutzlast zu erhöhen.

Typischerweise werden Nutzfahrzeuge vom Fahrzeughersteller nur als Chassis und ohne Ladungs-Aufbau beschafft, und dieser nachgerüstet, sodass Gewichtseinsparungen nur noch beim Kofferaufbau erzielt werden können.

Üblich ist es bisher, für die Kofferaufbauten Plattenmaterial unterschiedlicher Gestaltungen zu verwenden, die natürlich möglichst leicht sein sollen, z.B. Compound-Platten mit einer Kunststoff-Schaumschicht zwischen zwei Aluminium-Platten als Deckschichten, seien es Waben-Platten oder andere Hohlkammer-Platten, wobei die Deckschichten aus Aluminium oder auch aus Kunststoff bestehen können.

Zur Stabilisierung der Koffer-Aufbauten werden die einzelnen Platten jedoch in aller Regel über U-Profile oder Winkelprofile oder T-Profile aus Aluminium miteinander verbunden, an denen sie verklebt oder vernietet werden.

Diese Aluminium-Profile sind jedoch im Vergleich zu den Platten relativ schwer.

Der notwendige Innenausbau wird bisher üblicherweise nachträglich in den selbsttragenden Kofferaufbau eingebaut und so ausgelegt, dass er die Struktur des Aufbaus möglichst nicht belastet.

Bei diesen üblichen Aufbauten entsteht somit ein Materialmix aus verschiedenen Kunststoffen wie Harzen, Fasern und Lacken sowie Klebern und Metallen, die einer späteren sortenreinen Entsorgung entgegenstehen.

Die Druckschrift EP2423081A1 beschreibt ein Nutzfahrzeug mit einem Koffer-aufbau mit den Merkmalen des Oberbegriffs von Anspruch 1. Um die Wiederverwertung zu erleichtern ist der dabei vorgeschlagene Kofferaufbau einschließlich einer Aufbau-Hülle und einem Innenausbau mit Radkästen und Trittstufen aus Polypropylen-Platten aufgebaut, ggf. mit, die insbesondere als Hohlplatten aufgebaut sein können. Die Platten werden thermisch miteinander verschweißt, und ggf. thermisch verformt.

EP3640124A1 beschreibt einen Kofferaufbau für ein Fahrzeug, der aus Hohlkammer-Platten aufgebaut ist. Diese bestehen aus einem thermoplastischen Kunststoff, und sind durch Schweißnähte miteinander verbunden, wobei eine ansonsten freiliegende Schmalseite einer der Platten mit einem thermoplastischen Profil abgedeckt ist.

US5965238A beschreibt verschiedene Verfahren zum Nachbearbeiten und Verbinden von Hohlkammer-Platten aus einem thermoplastischen Material durch Ultraschall-Schweißen. Insbesondere beschreibt diese Druckschrift, geschlossene Kanten durch Verschweißen der gegenüberliegenden Deckschichten im Randbereich zu erzeugen, wobei zumindest eine der Deckschichten nach dem Verschweißen gekrümmt sein und eine einseitige Schräge bilden kann. Es wird weiter ein Ultraschall-Verschweißen von Hohlkammer-Platten für verschiedene Stoßkonfigurationen beschrieben.

WO0119603A1 offenbart ein Verfahren und eine Vorrichtung zur Herstellung von Randabschlüssen von Sandwichplatten mit Wabenkern und Deckschichten aus einem thermoplastischen Material. Dabei wird ein aufgeheiztes Formwerkzeug mit einer Rinne, deren Breite der Dicke der zu verschließenden Sandwichplatte entspricht, von der Schalseite her in Richtung der Hauptebene der Platte zunehmend auf deren offene Schmalseite aufgeschoben, wodurch sich die Deckschichten erwärmen und entsprechend der Kontur der Flanken der Rinne gebogen werden, bis sich die freien Endkanten der Deckschichten am Boden berühren und miteinander verschweißt werden.

US2010015392A1 beschreibt die Herstellung einer Platte mit geschlossenem Umfangsrand aus einer Hohlkammerplatte, die durch ein aufgeheiztes Form-werkzeug hindurch extrudiert wird, um die Deckschichten der Platte im Randbereich in der gewünschten Form miteinander zur verbinden.

### III. Darstellung der Erfindung

Die Erfindung schlägt einen Kofferaufbau mit den Merkmalen von Anspruch 1 und ein Herstellungsverfahren mit den Merkmalen von Anspruch 10 vor. Vorteilhafte Ausführungsformen ergeben sich aus den Unteransprüchen.

Hinsichtlich des Kofferaufbaus ist erfindungsgemäß vorgesehen, dass der Kofferaufbau außer der üblicherweise aus Wänden, Dach und Boden bestehenden Aufbau-Hülle auch Teile der mit dieser Aufbau-Hülle bereits fest und integral verbundenen Inneneinrichtung umfasst, und sowohl bei der Aufbau-Hülle als auch der Inneneinrichtung zur Herstellung Leichtbau-Platten in Form von Hohlkammer-Platten wie etwa Waben-Platten, verwendet werden und im Wesentlichen daraus bestehen, wodurch das Gewicht stark reduziert werden kann.

Unter Leichtbau-Platten sollen dabei Platten verstanden werden, deren Flächengewicht unter 6 kg/m2 liegt, besser unter 4 kg/m2 liegt.

Unter Hohlkammer-Platten werden alle Platten verstanden, die Hohlräume in ihrem Inneren aufweisen, und bei denen die beiden äußeren Deckschichten, die üblicherweise sogar aus schwereren Material als die Materialien in der Kernschicht dazwischen bestehen, beispielsweise durch zwischen den beiden Deckschichten verlaufende Stege gebildet werden.

Die Stege können parallel zueinander in einer Richtung verlaufen, oder in der Aufsicht auf die Hauptebene der Hohlkammer-Platte ein Wabenmuster aus viereckigen, sechseckigen oder anders geformten Wabenzellen bilden, was den Vorteil hat, dass bei einer Schnittkante von dieser Schnittkante aus nur die 1. angrenzende Wabe innerhalb der Hohlkammer-Platte zugänglich ist und nicht eine über die gesamte Länge der Hohlkammer-Platte verlaufender Kanal, wie bei parallel zueinander verlaufenden Stegen.

Vor allem wird dabei auf die üblicherweise entlang der Außenkanten der Aufbau-Hülle verlaufenden Metall-Profile verzichtet, was einen großen Teil der Gewichtsersparnis ergibt, aber dennoch eine ausreichende Stabilität erreicht.

Dabei ist der integrierte Teil des Innenausbaus so gestaltet und angeordnet, dass er die Stabilität der Aufbau-Hülle zusätzlich verbessert.

Der Innenausbau, der integraler Bestandteil des Kofferaufbaus ist, kann Regale aufweisen, wobei zwischen fixen Regalen und beweglichen Regalen zu unterscheiden ist.

Bei fixen Regalen ist sowohl der Montageort an der Aufbau-Hülle, meist einer Wand, festgelegt und diese sind nicht lösbar daran befestigt, sondern verschweißt oder verklebt, und auch die Position der Regal-Böden innerhalb eines solchen fixen Regals ist unveränderbar.

Bei einem beweglichen Regal sollen in der Regel die Regal-Böden in eine aufrechte Stellung geklappt werden können, um bei Nichtbedarf mehr Nutzraum zu schaffen zum Beispiel für sperrige Transportgüter, die ohnehin keinen Platz in einem solchen Regal fänden.

In beiden Fällen sind zumindest die Regalböden aus Leichtbau-Platten, insbesondere Hohlkammer-Platten, hergestellt, vorzugsweise den gleichen Platten wie die Aufbau-Hülle, zumindest hinsichtlich der Materialien, wenn auch nicht unbedingt der Platten-Dicke.

Die für klappbare Regalböden eines beweglichen Regals benötigten Lagerböcke oder ein ganzes Lagerungs-Gestell, werden meist aus Leichtmetall bestehen und werden an dem aus Leichtbau-Platten hergestellten Kofferaufbau in der Regel verklebt und höchstens zusätzlich verschraubt.

Der Innenausbau umfasst vorzugsweise auch wenigstens eine Zwischenwand, die vorzugsweise vom Boden bis zur Decke, also von der Bodenplatte bis zur Dachplatte, der Aufbau-Höhe durchgeht und mit diesen sowie ggfs. einer angrenzenden Wand fest verbunden, insbesondere verschweißt oder verklebt, ist und dadurch die Aufbau-Hülle zusätzlich versteift.

Auch die genannten, insbesondere fixen, Regale tragen zur Stabilität der Aufbau-Hülle bei, insbesondere, wenn sie zwischen zwei Wänden der Aufbau-Hülle oder zwischen einer Außen-Wand und einer der Zwischenwände durchgehen und mit beiden, insbesondere allen drei angrenzenden Wänden, fest verbunden sind. Vorzugsweise werden dabei Verbindungen gerade zwischen Zwischenwänden und Aufbauhülle und/oder Regalelementen und Aufbauhülle nicht nur durch Schweißen und Kleben hergestellt, sondern auch durch Formschluss, indem beispielsweise eine Zwischenwand oben in eine Aussparung, also nach unten offene Vertiefung, der Dachplatte eintaucht und/oder unten in eine nach oben offene Vertiefung der Bodenplatte.

Analog können Regalböden eines fixen Regals an ihren Enden in entsprechende Ausnehmungen der sie tragenden Bauteile, sei es eine Außenwand und/oder eine Zwischenwand, eintauchen, wobei auf das zusätzliche Verkleben oder Verschweißen, insbesondere der Deckschichten, der aneinandergrenzenden Endkanten der Platten, nicht verzichtet wird.

Auf diese Art und Weise kann ein Kofferaufbau geschaffen werden, der bei etwa 12 m3 Volumen trotz bereits teilweise enthaltenen Innenausbau ein Gewicht von unter 500 kg, insbesondere sogar unter 300 kg, besitzt.

Da die für den Kofferaufbau verwendeten Leichtbauplatten vorzugsweise aus nur einem Material bestehen, also sowohl hinsichtlich der Deckschichten als auch der Kernschicht, besteht der gesamte Kofferaufbau wie zuvor beschrieben aus nur einem Material, was am Ende der Nutzungsdauer dessen Recycling wesentlich erleichtert, z.B. im Gegensatz zu Compound-Platten mit zwei Alu-Deckschichten und einer Schaumschicht aus Kunststoff dazwischen.

Lange, frei tragende Strecken von horizontal verlaufenden Elementen des Kofferaufbaus, wie etwa die Dach-Platte, können gegen Durchbiegen verstrebt werden durch darunter gesetzte Stützleisten, die ebenfalls aus einer solchen Leichtbau-Platte bestehen, und die mit ihrem Querschnitt aufrecht stehend unter die gefährdete Stelle gesetzt werden, bei der Dachplatte beispielsweise entlang der Dachmitte in Fahrtrichtung verlaufend. Oder auf der Seite des Kofferaufbaus, an dem eine z.B. Schiebetür angeordnet werden soll, auf der Innenseite der Wand, die diese Seite der Dachplatte abstützt, unter der Dachplatte als zusätzliche Auflagefläche.

Vorzugsweise umfasst der Innenausbau und/oder die Aufbauhülle auch die Radkästen und/oder Trittstufen, die notwendig sind, damit ein Benutzer nicht in einem einzigen großen Schritt vom Straßenrand aus auf das Niveau der Bodenplatte hinaufsteigen muss.

Auf Trittstufen und dem Laufweg der Bodenplatte wird meist ein rutschfester Bodenbelag aufgebracht, sei es eine Holzsiebdruckplatte, ein Alu-Riffelblech, eine. rutschhemmende Kunststoff-Folie, eine Gummimatte oder ein flüssig aufzubringender und aushärtender Anti-Rutsch-Belag.

In dem Kofferaufbau anzuordnende Türen müssen teilweise aus Metall, z.B. Aluminium, bestehen, beispielsweise der Türstock, die Scharniere und/oder der Rahmen des Tür-Blattes, jedoch zumindest das Türblatt wird vorzugsweise wieder aus Leichtbau-Platten, insbesondere den gleichen Leichtbau-Platten wie der Kofferaufbau, also Hohlkammer-Platten, bestehen.

Bei einer Schiebetür werden die Führungen für die Schiebetür aus Metall bestehen und üblicherweise auf der Außenseite einer Wand des Kofferaufbaus verlaufen und dort befestigt sein.

Um ein Durchhängen der Dachplatte zu vermeiden, ohne ein typisches Satteldach mit oben abgeschrägten Querwänden herstellen zu müssen, kann eine nach oben ballig gewölbte Dachplatte auch dadurch erzielt werden, dass die Dachplatte in Längsrichtung an ihrer Unterseite V-förmig geschlitzt wird, aber der Schlitz nicht die obere Deckschicht erreicht.

Die Dachplatte wird dann am Schlitz gebogen und die unteren Deckschichten miteinander verschweißt.

Wenn dabei der untere Schlitz ausreichend weit vor dem vorderen und hinteren Ende der Dachplatte endet, etwa mindestens 500 mm davor, wird dadurch eine Dachplatte geschaffen, die über den Großteil ihrer Länge nach oben ballig oder V-förmig gewölbt ist, jedoch eine gerade vordere und hintere Endkante besitzt und mit vorderen und hinteren Querwänden mit durchgehend ebener, gerader Oberkante leicht verbunden werden kann.

Zwei miteinander zu verbindende Leichtbau-Platten, insbesondere Hohlkammer-Platten, können auf sehr unterschiedliche Art und Weise miteinander verbunden werden.

Dabei tritt zunächst das grundsätzliche Problem auf, dass die Schmalseiten zweier miteinander verbundener Platten zwar an der Verbindungsstelle nicht zugänglich sind, da dort die Platten in der Regel dicht miteinander verschweißt oder verklebt sind. Am anderen Ende der Platte ist jedoch oft eine zugängliche und sichtbare offene Schmalseite vorhanden, was aus optischen Gründen Stabilitätsgründen und Witterungs-Gründen nicht hinnehmbar ist und weshalb eine solche offene Schmalseite verschlossen werden muss.

Erfindungsgemäß bestehen die verwendeten Leichtbau-Platten aus einem thermoplastischen Kunststoff, sodass sie unter Erhitzung verformt werden können.

Das Verschließen wird erreicht, indem eine ansonsten offene und zugängliche Schmalseite dadurch geschlossen ist, dass die beiden Deckschichten sich aneinander annähern und mit ihren Endkanten sich berühren und dicht miteinander verbunden sind, insbesondere verschweißt sind oder auch verklebt sind. Die miteinander verbundenen Deckschichten bilden dann an der Schmalseite einer solchen Leichtbau-Platte beispielsweise einen halbrunden Querschnitt oder einen symmetrischen V-förmigen Querschnitt oder auch einen einseitig schrägen Querschnitt.

Auf diese Art und Weise werden gemäß einer erfindungsgemäßen Alternative zwei einseitig angeschrägte Schmalseiten, also Schrägflächen, an der Schmalseite von Leichtbau-Platten aneinandergelegt und die Schrägflächen ggf. sogar flächig miteinander verklebt werden oder auch verschweißt werden, und erfindungsgemäß wird am radial inneren und äußeren Ende dieser Schrägflächen jeweils eine Schweißnaht eingebracht.

Besitzen zwei solche Platten dagegen an ihren Schmalseiten einen halbrunden Abschluss, so werden sie gemäß einer weiteren erfindungsgemäßen Alternative dennoch stumpf aneinandergesetzt, und der sich bildende Winkel auf der Innenseite als auch auf der Außenseite der im Winkel aneinander gesetzten Platten eignet sich gut für das Einbringen einer Schweißnaht.

Allerdings kann eine gewinkelte Hohlkammer-Platte auch dadurch hergestellt werden, dass von einer Seite einer der Hauptseiten der Platte her eine V-förmige Nut in die Platte eingebracht wird, die aber maximal bis zu Innenseite der gegenüberliegenden Deckschicht reicht. Wenn der Innenwinkel der V-förmigen Nut entsprechend dem gewünschten Innenwinkel der gebogenen Hohlkammer-Platte entspricht, kann nach Erhitzen die Hohlkammer-Platte um die durchgehende Deckschicht entlang des Bodens der Nut herumgebogen werden und anschließend die Flanken der Nut an ihrem inneren Ende gegeneinander verklebt oder verschweißt werden, auch flächig miteinander verklebt werden.

Sollen dagegen zwei solcher Leichtbau-Platten T-förmig aneinandergesetzt werden, so wird die eine Platte an die durchgehende andere Platte stumpf angesetzt und um die Kontaktfläche der an der durchgehenden Platte endenden Platte herum ein Verschweißen vorgenommen und/oder ein Verkleben der Schmalseite der an der durchgehenden Platte endenden Platte vollzogen.

Eine andere Möglichkeit besteht darin, dass in der durchgehenden Platte eine Ausnehmung eingearbeitet ist, in welche die andere Platte mit ihrem Randbereich eintaucht und darin verklebt oder verschweißt ist. Eine solche Ausnehmung kann auf mehrere Ausnehmungen entlang der Kontaktfläche der beiden Platten zueinander verteilt werden. Durch den Formschluss und ggfs. das flächige Verkleben der in diesem Fall deutlich größeren Kontaktfläche ergibt sich eine hohe Stabilität.

Dabei kann die Schmalseite der eintauchenden Platte auch auf einen V-förmigen oder Kegelstumpf-förmigen Querschnitt verformt sein, was das Einführen erleichtert und auch das Herstellen der entsprechenden Ausnehmung.

Auch ein stumpfes Verschweißen von in einer Ebene fluchtend zueinander liegenden Platten kann durchgeführt werden, wie anhand der Zeichnungen beschrieben werden wird.

Hinsichtlich des Verfahrens zum Herstellen des Kofferaufbaus ist erfindungsgemäß vorgesehen, dass sowohl die Aufbau-Hülle als auch zumindest ein Teil der Inneneinrichtung eine integrale Einheit bilden aus verklebten oder verschweißten Leichtbau-Platten und Platten-Teilen, und dabei auf verbaute Metall-Profile zumindest entlang der Kanten der Aufbau-Hülle verzichtet wird.

Zum Herstellen einer gewinkelten Hohlkammer-Platte aus nur einer Platte kann wie beschrieben in die Platte eine V-Nut oder auch eine anders gestaltete Nut eingebracht werden, die insbesondere nicht weiter geht als bis zur Innenseite der gegenüberliegenden Deckschicht, und nach Erhitzen der Deckschicht die Platte um die Verlaufsrichtung des Nutengrundes herumgebogen wird, bis sich ihre beiden Teile in der gewünschten Winkelstellung zueinander befinden.

Dann sollten die äußeren Enden der Nut gegeneinander anliegen oder so nahe beisammen liegen, dass man sie miteinander verschweißen oder verkleben kann.

Soll ein solcher Winkel aus zwei getrennten Leichtbau-Platten hergestellt werden, so werden diese gemäß einer ersten erfindungsgemäßen Alternative an ihren Schmalseiten jeweils angeschrägt und mit ihren Schrägflächen gegeneinander gelegt, wobei sowohl auf der Winkel-inneren Seite als auch der Winkel-äußeren Seite Schweißnähte eingebracht werden, eventuell auch die gesamten Schrägflächen miteinander verschweißt werden können. Zumindest können Sie jedoch miteinander verklebt werden, zusätzlich zu der äußeren und inneren Schweißnaht.

Bei einem gerundeten schmalseitigen Abschluss der Platten werden diese gemäß einer zweiten erfindungsgemäßen Alternative mit ihren halbrunden Abschlüssen gegeneinander gelegt, und in den oder die sich dann natürlicherweise ergebenden Winkel zwischen den beiden halbrunden Endbereichen werden Schweißnähte oder auch Klebenähte eingebracht.

Wie oben erläutert werden T-förmige Verbindungen zwischen zwei Leichtbau-Platten stabilitätsmäßig verbessert, indem in der durchgehenden Platte eine Ausnehmung eingearbeitet wird, die diese Platte jedoch vorzugsweise nicht durchdringt, und die eine solche Dimensionierung aufweist, dass die an der durchgehenden Platte endende Platte mit ihrem Randbereich in diese Ausnehmung eingesteckt und darin verklebt und/oder verschweißt werden kann, wobei insbesondere die Deckschichten, vorzugsweise umlaufend hinsichtlich der durchgehenden und/oder der dort endenden Platte, miteinander verschweißt werden.

Darüber hinaus können aber auch die Flanken der Ausnehmung mit dem eintauchenden Bereich der anderen Platte verklebt oder verschweißt werden, was wegen der großen Kontaktfläche eine sehr stabile Verbindung ergibt.

Wie das Verschließen einer offenen Schmalseite einer Leichtbau-Platte erfolgt, wird nachfolgend anhand der Figuren erläutert.

### c) Ausführungsbeispiele

Ausführungsformen sind im Folgenden beispielhaft näher beschrieben. Es zeigen:
- **Figur 1:**: einen Kofferaufbau ohne Anbauten als durchsichtiges Glasmodell in perspektivischer Ansicht,
- **Figur 2a:**: den Kofferaufbau der **Figur 1****,** jedoch mit Anbauten und auf einem Fahrgestell, in der Aufsicht von oben,

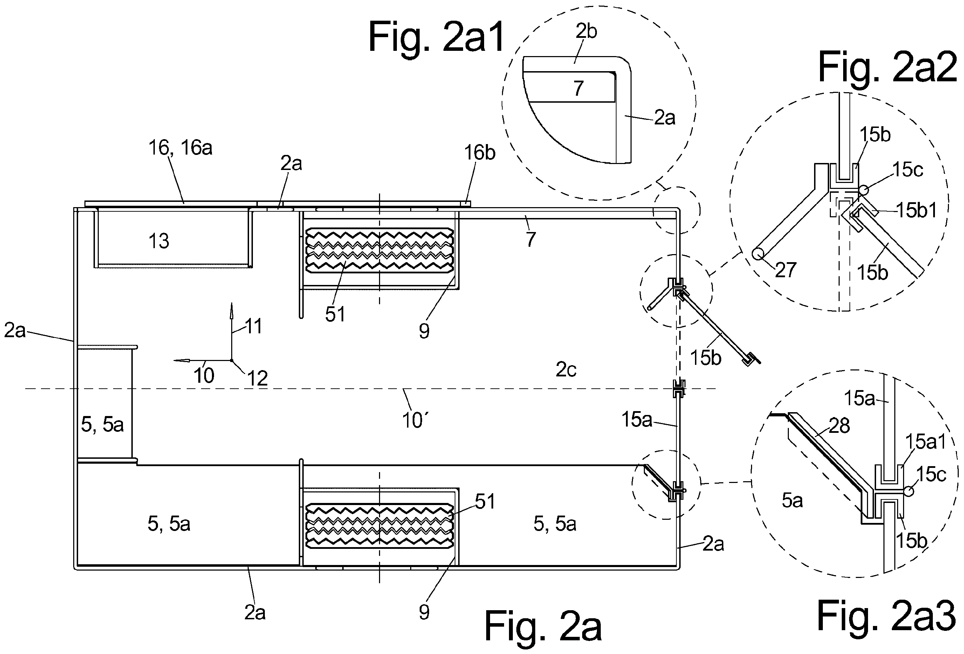

- **Figuren 2a1** - **2a3:**: Ausschnittvergrößerungen aus **Figur 2a****,**

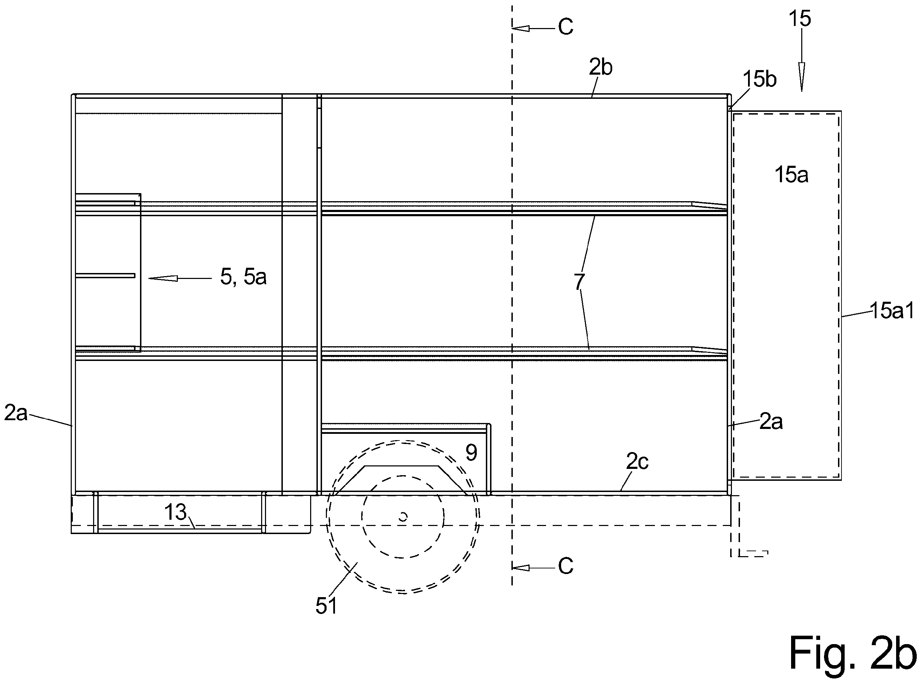

- **Figur 2b:**: den Kofferaufbau der **Figur 2a** in der Seitenansicht,

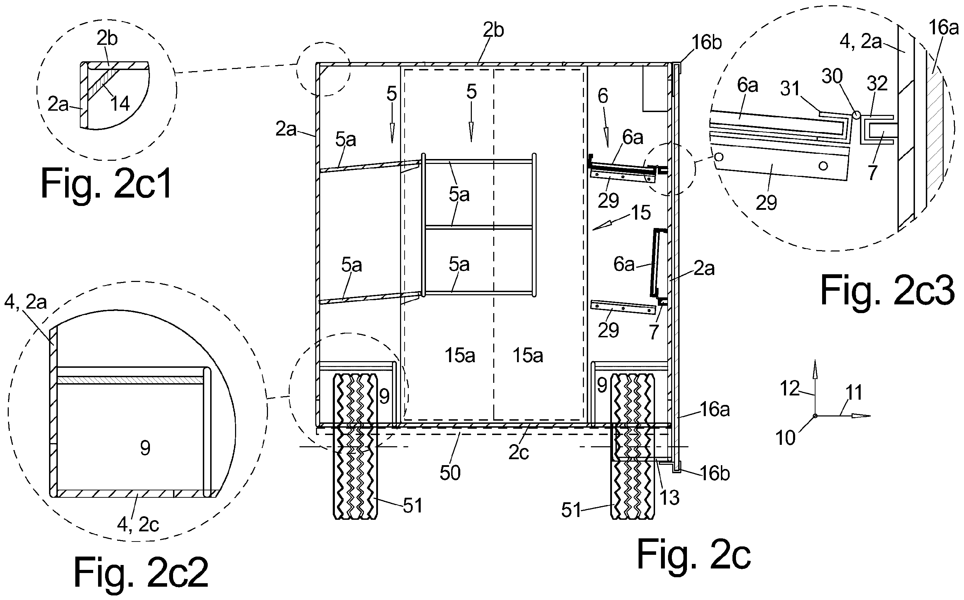

- **Figur 2c:**: den Kofferaufbau der **Figur 2a**, b ein in Querrichtung zur Fahrtrichtung geschnitten entlang der Linie C - C in **Figur 2b****,**
- **Figuren 2c1** - **2c3:**: Ausschnittvergrößerungen aus **Figur 2c****,**

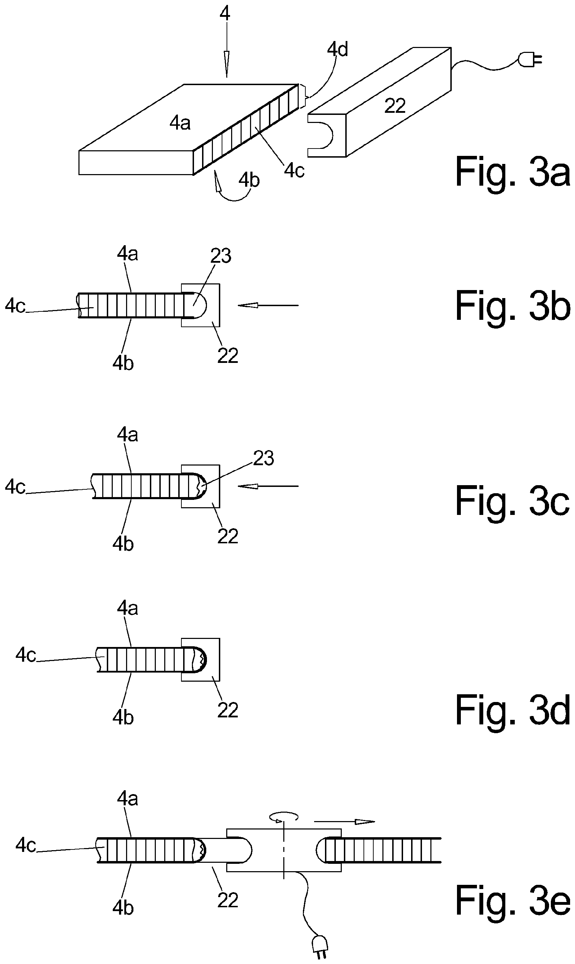

- **Figuren 3a -3d:**: das Herstellen einer gerundeten Endkante an einer Leichtbau-Platte aus thermoplastischen Kunststoff in mehreren Arbeitsschritten,
- **Figur 3e:**: die Verwendung eines alternativen Werkzeuges hierbei,

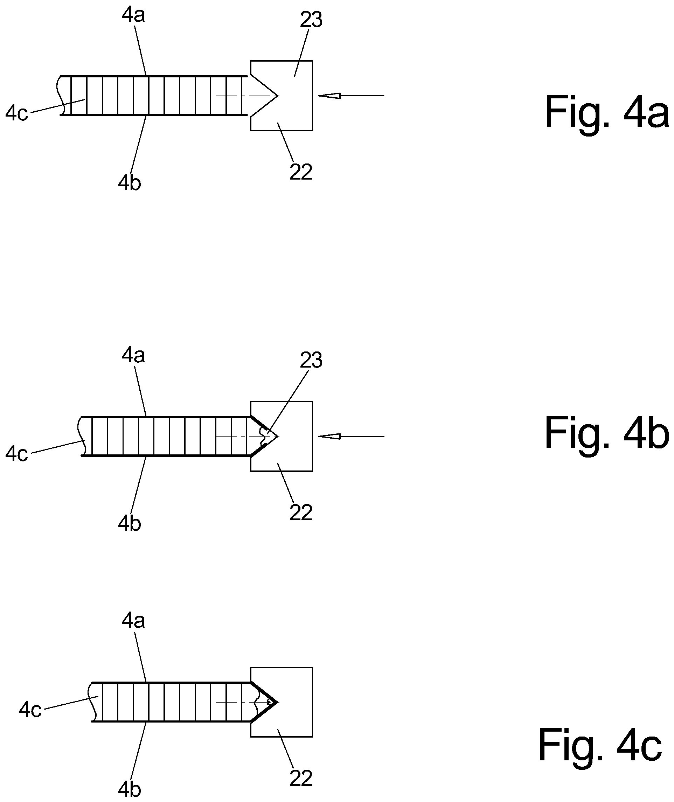

- **Figur 4a bis c:**: das Herstellen einer im Querschnitt der Platte symmetrisch zugespitzten Endkante an einer Leichtbau-Platte aus thermoplastischen Kunststoff in mehreren Arbeitsschritten,

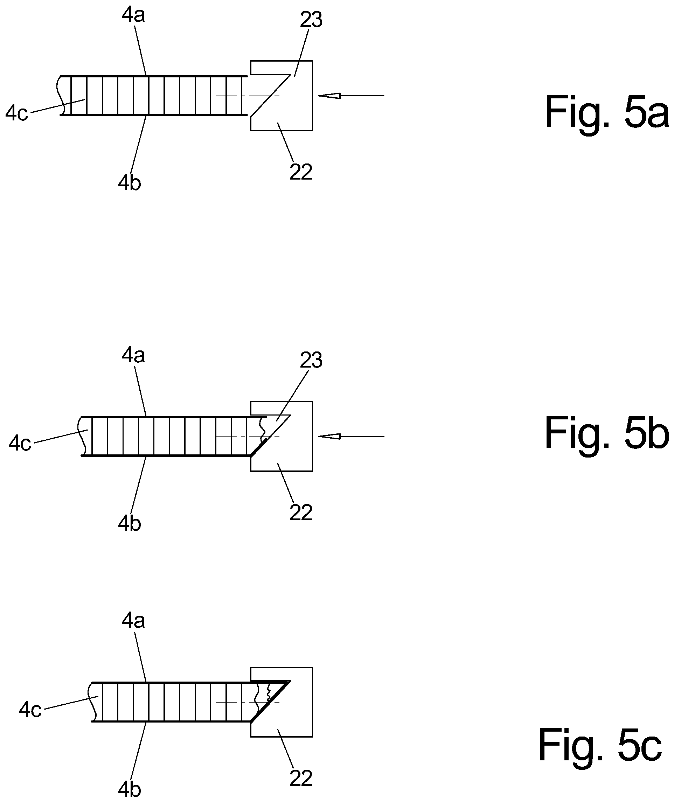

- **Figuren 5a bis c:**: das Herstellen einer im Querschnitt der Platte nur einseitig zugespitzten Endkante an einer Leichtbau-Platte aus thermoplastischen Kunststoff in mehreren Arbeitsschritten,

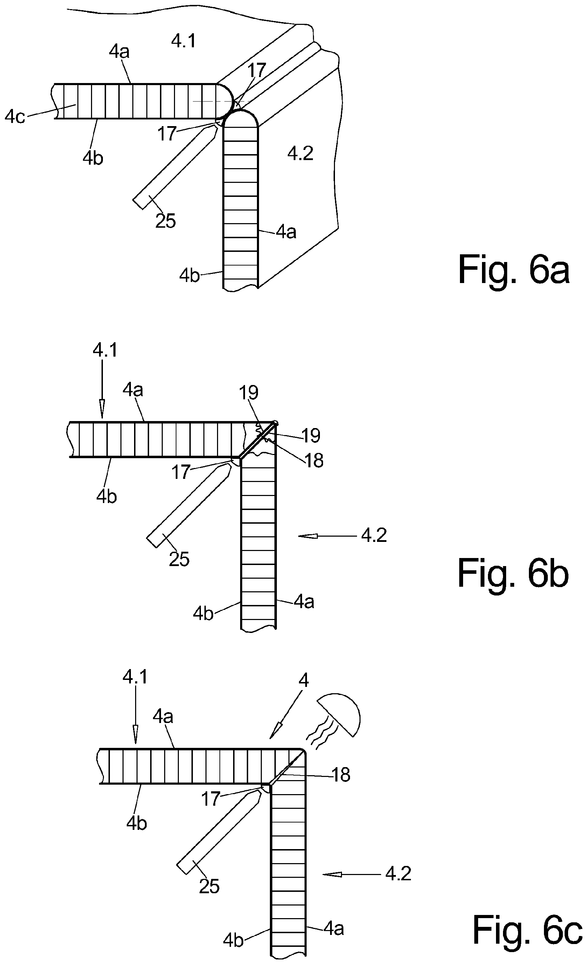

- **Figuren 6a bis c:**: Prinzipdarstellungen unterschiedlicher Herstellungs-Weisen einer gewinkelten Platten-Anordnung,

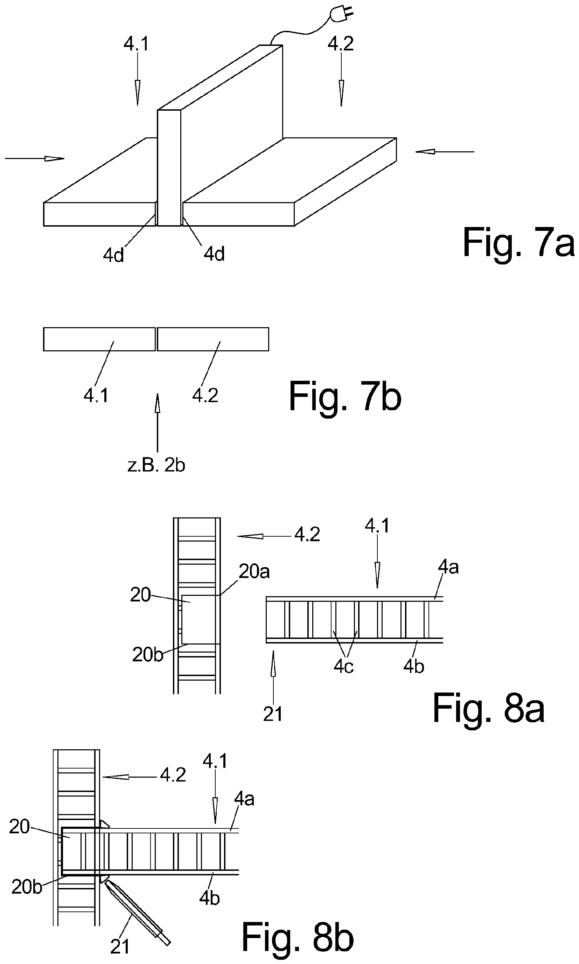

- **Figuren 7a, b:**: das Herstellen einer stumpfen Schweißnaht zwischen zwei zueinander fluchtenden Leichtbauplatten,
- **Figuren 8a, b:**: das Erstellen einer T-förmigen Verbindung zwischen zwei Leichtbauplatten.

Es wird darauf hingewiesen, dass die dargestellten Kofferaufbauten nur insofern Ausführungsformen der Erfindung darstellen, als dabei zumindest eine der Verbindungstechniken der Figuren 6a und 6b zum Einsatz kommt.

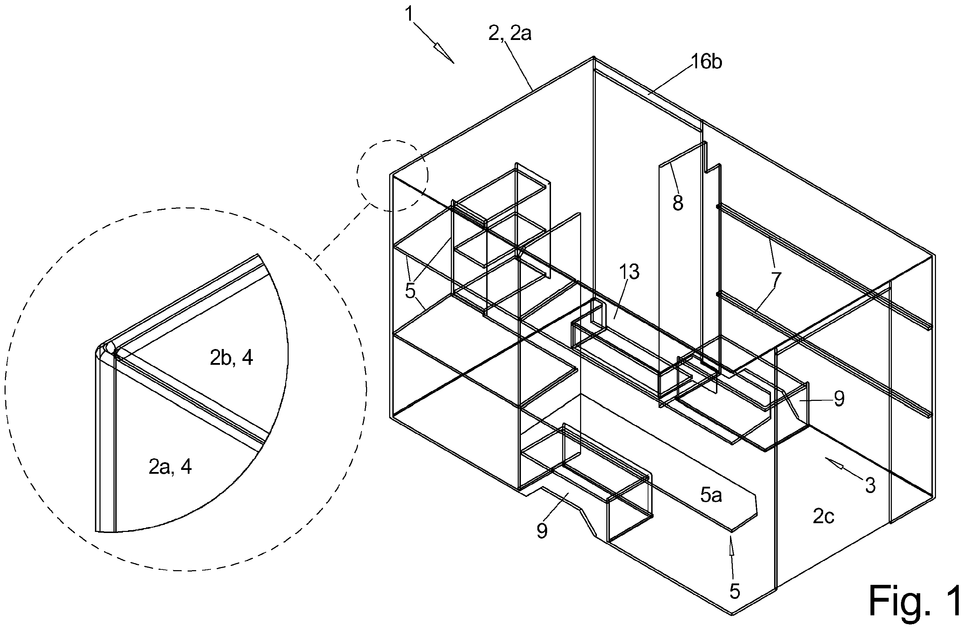

Die perspektivische Darstellung der **Figur 1** lässt erkennen, dass die Aufbau-Hülle 2 des Kofferaufbaus 1 meist im wesentlichen Kubus-förmig ist, nämlich mit jeweils im rechten Winkel aneinander angrenzenden Wänden 2a sowie auf diesen in der Vertikalen 12 stehenden Wänden 2a einer an deren oberen Enden befestigten Dach-Platte 2b sowie einer am unteren Ende befestigten Boden-Platte 2c, wobei dieser Kubus durchbrochen wird durch die von unten in diesen Kubus hineinragenden Aussparungen für die Räder des Fahrzeugs, auf den dieser Koffer-Aufbau 1 aufgesetzt werden soll. Diese Aussparungen sind abgedeckt durch Radkästen 9, die kubusförmige, nach unten offene Bauteile sind, die an die Innenflächen je einer Seitenwand fest angesetzt und Bestandteil der Aufbau-Hülle 2 sind.

Die **Figuren 1** **und** **2a** zeigen auch, dass die Radkästen 9 keine vordere Stirnwand besitzen, sondern unmittelbar an die Rückseite je einer dieser beiden Zwischenwände 8 angesetzt sind, was zusätzliches Material spart.

Die in Fahrtrichtung 10 vorne, also in **Figur 1** links oben, dargestellte Seitenwand 2a, die Frontwand, ist geschlossen, da kein Durchgang zum Fahrerhaus vorgesehen ist, die Heckwand ist dagegen offen zum Einsetzen einer Tür 15, meist einer Doppeltür 15, wie in den **Figuren 2a bis 2c** dargestellt, und auch die in Fahrtrichtung 10 straßenseitige, meist rechte, Seitenwand 2a besitzt nahe dem vorderen Ende eine Öffnung, die beim komplettierten Kofferaufbau 1 von einer außen entlang der Aufbau-Hülle 2 verfahrbaren Schiebetür 16 verschlossen werden kann.

In der Vergrößerung in **Figur 1** ist zu erkennen, dass die Dach-Platte 2b - die in Fahrtrichtung in der Regel nicht aus einer, sondern mehreren Leichtbau-Platten 4 zusammengesetzt ist - sowie frontseitige und seitliche Seitenwand 2a mit ihren gegeneinander weisenden Kanten gegeneinander fixiert sind ohne dass dort ein Metall-Profil hierfür benutzt wird.

Das Wesentliche ist, dass integraler Bestandteil des Kofferaufbaus 1 bereits diverse, im Idealfall alle, Teile des Innenausbaus 3 sind, zumindest die ortsfest in einer solchen Aufbauhülle 2 zu befestigenden Teile des Innenausbaus 3.

Wie dies besser die Aufsicht der **Figur 2a** zeigt, sind dies beispielsweise an der Frontwand oder der einen Seitenwand 2a fest montierte Regale 5 in Form von fixen Regalen, bei denen also das Regal 5 an einer nicht veränderlichen Position an der Innenseite der jeweiligen Wand befestigt ist durch Verkleben oder Verschweißen, und bei denen auch die Regalböden 5a in ihrer Position innerhalb des Regals fix angeordnet und beispielsweise mit den vertikalen Tragplatten des Regals - siehe das Regal 5 an der Frontwand - fix verbunden sind oder wie besser in **Figur 2a** zu erkennen einerseits mit einer Zwischenwand 8 und andererseits mit einer frontseitigen oder heckseitigen Wand 2a.

Dabei ist auch zu erkennen, dass sich von den Seitenwänden 2a aus jeweils eine Zwischenwand 8 in Richtung Längsmitte des Kofferaufbaus 1 erstreckt, sodass dazwischen noch ein Durchgang für den Nutzer frei bleibt, aber sich diese Zwischenwände 8 von der Dach-Platte 2b bis zur Bodenplatte 2c erstrecken und gegenüber diesen vorzugsweise nicht nur stumpf angesetzt und verschweißt oder verklebt sind, sondern mit ihrem oberen bzw. unteren Ende in eine entsprechende, nur nach unten offene Ausnehmung der Dach-Platte bzw. eine nur nach oben offene Ausnehmung in der Boden-Platte 2c eintauchen und darin stabiler verschweißt oder verklebt werden können als nur mit stumpfem Ansetzen.

**Figur 1** lässt auch zwischen der rechten Zwischenwand 8 und der Heckwand 2a die auf zwei verschiedenen Höhen horizontal verlaufenden Tragleisten 7 für ein daran zu montierendes, nicht fixes, sondern klappbares Regal 6 erkennen, sowie ein Führungs-Teil 16b oberhalb der seitlichen Türöffnung, die durch diese Schiebetür - die besser in **Figur 2a** erkennbar ist - verschlossen werden kann.

Die Bodenplatte 2c weist eine Trittstufe 13 auf im Bereich unmittelbar innerhalb der Öffnung für die seitliche Tür, die niedriger liegt als das Niveau der Bodenplatte 2c und durch einen separaten, nach oben offenen Kasten, der an eine entsprechende Ausnehmung in der Bodenplatte 2c von unten angesetzt ist, erzeugt wird und natürlich ebenfalls aus dem Material der Leichtbau-Platten besteht.

In den **Figuren 2a** bis **Figur 2c** ist die Heck-seitige Tür 15 eingezeichnet, die als 2-flügelige Tür vorgesehen ist.

Wie in **Figur 2b** und vor allem in **Figur 2a** und der dortigen Vergrößerung der Figur 2a2 dargestellt, ist der jeweilige Türflügel gegenüber dem Türstock 15b mittels Türscharnieren 15c aufschwenkbar, wobei das Türblatt 15a jedes Türflügels aus Leichtbauplatten, insbesondere den gleichen wie die der Aufbau-Hülle 2, hergestellt ist, welcher aber meist von einem Türblatt-Rahmen 15a1, meist aus Aluminium, eingefasst ist.

In **Figur 2b** ist vor allem am oberen Rand und in den Figuren 2a2 und 2a3 am seitlichen Rand der Öffnung ein Teil des Türstockes 15b zu erkennen, der mit der Aufbau-Hülle 2 stabil verbunden sein muss und meist aus einem Aluminium-Rahmen aus einem U-Profil oder Winkel-Profil besteht, der gegenüber der Heckwand verschraubt und/oder, meist zusätzlich, verklebt ist.

Der stabile Türstock 15b wird ferner dazu benutzt, um im Inneren der Aufbau-Hülle 2 weitere Anbauteile stabil und einfach zu befestigen:
**Figur 2a** zeigt, dass das im hinteren linken Bereich fest montierte Regal 5 am hinteren Ende - in der Aufsicht betrachtet - abgeschrägte Regalböden 5a aufweist, da die Regalböden 5a weiter zur Längsmitte 10' des Aufbaus 2 hin vorstehen als der seitliche Rand der Türöffnung für die Hecktür 15.

Damit die Regalböden 5a auch in diesem abgeschrägten Bereich, in dem sie ja nicht mehr an der Heckwand 2a fixiert werden können, dennoch abzustützen, ragt auf Höhe jedes Regalbodens 5a von dem dortigen vertikal verlaufenden Teil des Türstockes 15b ein Stützprofil 28 schräg so in den Innenraum des Aufbaus 2 hinein, dass es die Abschrägung des jeweiligen Regalbodens 5a abstützt und vorzugsweise mit diesem verbunden ist.

Das Stützprofil 28 ist nur mit seinem einen Ende am Türstock 15 b befestigt, meist verschraubt, und kragt von dort frei aus. Es besteht meist aus Aluminium.

Die Figur 2a2 zeigt ferner, dass - in ähnlicher Weise wie das Tragprofil 28 - am anderen, von hinten betrachtet rechten, vertikalen Teil des Türstockes 15b ein in den Innenraum des Aufbaus hineinragender Handgriff 27 befestigt, meist verschraubt, ist, den der Fahrer beim Einsteigen von hinten benutzen kann.

Der etwa U-förmige Bügel, dessen verbindender Schenkel primär den Handgriff 27 bildet, ragt mit seiner Hauptebene von der Innenseite des Türstockes 15 b aus nach schräg vorne in den Innenraum hinein und wird mit den freien Enden seiner beiden frei endenden Schenkel, also oben und unten, am Türstock 15 b befestigt.

In **Figur 2a** ist in der Vergrößerung Figur 2a1 ferner dargestellt, dass die Tragleiste 7 für das später zu montierende Klapp-Regal 6 entlang der Seitenwand 2a verläuft, aber zur Verbesserung der Stabilität auch mit der Heckwand 2a fest verbunden ist, insbesondere in diese hineinragt.

In **Figur 2c** sind ebenfalls weitere Detailvergrößerungen dargestellt:
Die Vergrößerung der Figur 2c3 zeigt, wie an jeder der Tragleisten 7 ein an die Innenseite der Seitenwand hochklappbarer Regalboden 6a montiert ist, um im hochgeklappten Zustand Platz für sperrige Ladung zu schaffen:
Dabei ist ein U-förmiges Tragprofil 32, meist aus Aluminium, passend zur Dicke der Tragleiste 7 in Querrichtung 11 auf deren in Fahrtrichtung, die Längsrichtung 10, verlaufende Schmalseite aufgeschoben und mit dieser verklebt.

Der Regalboden 6a, dessen Fläche vorzugsweise aus dem gleichen Material wie der Aufbau besteht, ist ebenfalls in einem in der Regel umlaufenden Regalboden-Rahmen 31, meist aus Aluminium, aufgenommen, und über ein Scharnier 30, dessen Schwenkachse in Längsrichtung 10 verläuft, am Tragprofil 32 befestigt.

Damit der Regalboden 6a im hochgeklappten Zustand auch belastbar ist, liegt er an seinem in Fahrtrichtung 10 vorderen und hinteren Ende auf einem Ablageprofil 29 auf, welches einerseits an der Rückwand 2a und andererseits an der Zwischenwand 8 in analogen Positionen befestigt ist, sei es verklebt und/oder verschraubt.

Wie dargestellt, verläuft der Regalboden 6a im abgelegten Zustand nach außen zur Seitenwand hin abfallend und/oder besitzt einen aufragenden Wulst am vorderen, freien, zur Längsmitte des Aufbaus hin weisenden, Rand, um ein Herabfallen von Paketen während der Fahrt vom Regalboden 6a zu verhindern.

In **Figur 2c** sind ferner auf der Außenseite der rechten Seitenwand 2a am oberen und unteren Ende das jeweils etwa U-förmige, in Fahrtrichtung 10 verlaufende, als Schiebetür-Führung 16b dienendes Führungsprofil, meist aus Aluminium, zu erkennen, die am Aufbau befestigt sind und zwischen denen das Türblatt 16a verschiebbar in Fahrtrichtung 10 geführt ist.

Die Vergrößerung Figur 2c1 zeigt, dass im Innen-Winkel zwischen zwei winkelig aneinandergrenzenden Platten, hier insbesondere die Seitenwand 2a und der Dach-Platte 2b, diagonal ein streifenförmiges Plattenstück als Eckversteifung 14 eingeklebt oder eingeschweißt werden kann, wobei der entstehende, dreieckige Kanal dazwischen als Kabelkanal benutzt werden kann.

Die I Vergrößerung Figur 2c2 zeigt, dass die Oberseite des Radkastens 9 gegenüber dessen Seitenwänden abgesenkt montiert ist, damit darauf abgelegt Gegenstände nicht herabrutschen können.

Die folgenden Figuren zeigen Details hinsichtlich der Bearbeitung von Leichtbauplatten 4 oder der Verbindung von Leichtbauplatten 4:
**Figur 3a** zeigt in perspektivischer Ansicht die - beispielsweise aufgrund eines Zuschnitts dieser Hohlkammer-Platte 4 auf Maß - offene Schmalseite 4d, in der die Kernschicht 4c bestehend in diesem Fall aus einer Vielzahl von lotrecht zur Hauptebene 4" der Platte 4 stehenden Distanz-Stegen zwischen oberer Deckschicht 4a und unterer Deckschicht 4b der Hohlkammer-Platte 4 sichtbar ist.

Um diese Schmalseite 4d zu verschließen, wird diese aus einem thermoplastischen Kunststoff bestehende Hohlkammer-Platte 4 mit einem beheizbaren Form-Werkzeug 22 bearbeitet, welches eine Temperatur erreicht, bei der das Material der Hohlkammer-Platte 4 zwar noch nicht flüssig wird, aber bereits verformbar ist.

Dieses als Form-Leiste ausgebildete Form-Werkzeug 22 besitzt in **Figur 3a** **- d** an einer seiner Längsseiten eine Rinne 23 mit einer in diesem Fall etwa halbrunden Querschnittskontur und einer Breite, die geringfügig breiter ist als die Dicke der Hohlkammer-Platte 4, die ja überall gleich dick sein sollte.

Wie die Seitenansichten der **Figuren 3b bis 3d** zeigen, wird das Form-Werkzeug 22 im erhitzten Zustand auf die offene Schmalseite 4d aufgeschoben, sodass die beiden Deckschichten 4a, b sehr schnell in Kontakt mit der heißen Wandung der Rinne 23 geraten und mit zunehmender Erwärmung beim Druck entlang der Plattenebene 4" von den halbrunden Begrenzungswänden der Rinne 23 in Richtung mittiger Plattenebene 4" umgelenkt werden, wie in **Figur 3c** zu erkennen. Bei noch weiterem Aufschieben des Form-Werkzeuges 22 - was so langsam erfolgen muss, dass die betroffenen Teile der Hohlkammer-Platte 4 Zeit zum Erwärmen haben - treffen sich die beiden Deckschichten 4a, b mit ihrer vorderen freien Endkante am Boden der Rinne 23 und werden dort miteinander verschweißt.

Die Stege 4c der Kernschicht werden dabei im Bereich der Rundung des Form-Werkzeuges 22 als auch dem gerundeten vorderen Enden der Deckschicht 4a, b gestaucht und nehmen eine gewellte Form oder Zickzackform an.

Nach Abziehen des Werkzeuges 22 und Auskühlen der Hohlkammer-Platte 4 weist diese eine nun geschlossene, im Querschnitt halbrunde, dichte Endkante auf und kann weiterverarbeitet werden, zum Beispiel mit anderen Platten verbunden werden.

**Figur 3e** zeigt alternativ als Form-Werkzeug 22 eine drehbare Form-Rolle, bei der die Rinne 23 als Ringnut in deren Umfangs-Fläche angeordnet ist, und die Verformung der Schmalseite 4d erfolgt, indem die Form-Rolle mit entsprechendem Druck entlang dieser Schmalseite 4d langsam entlang gerollt wird.

Denn mit zunehmender Länge der Form-Leiste ist eine gleichmäßige Anlage an der etwa ebenso langen Schmalseite 4d schwierig zu erreichen.

Die **Figuren 4a** **bis c** zeigen - analog zu den **Figuren 3b bis 3d** - die gleiche Vorgehensweise lediglich mit einer anderen Formgebung der Rinne 23, die nun den Querschnitt einer V-Nut 24 mit geraden Flanken 24a, b aufweist,
Auch hier wird die Form-Leiste 22 quer zur Verlaufsrichtung der V-Nut 24 zunehmend auf die Schmalseite 4d der Hohlkammer-Platte 4 aufgeschoben, die dadurch letztendlich eine im Querschnitt spitzen, symmetrisch zur Haupt-Mittelebene 4" der Platte 4 liegende, dicht geschlossene Schmalseite erhält.

Dies kann beispielsweise zum formschlüssigen Einstecken in entsprechende Ausnehmungen einer zu dieser Platte quer verlaufenden Platte, also einer T-Konstellation, benutzt werden, wie prinzipiell in Figur 8a, b dargestellt.

Die **Figuren 5a** **bis c** zeigen mit analogen Darstellungen wie die **Figuren 4a** **bis c** eine Form-Leiste 22 mit einer V-Nut 24, deren Querschnittsform ebenfalls V-förmig ist, aber nur eine schräg gestellte Flanke 24b aufweist, während die andere Flanke 24a der V-Nut 24 parallel zur Schieberichtung des Werkzeuges 22 zur Leichtbauplatte, hier Hohlkammer-Platte 4, und damit parallel zur Hauptebene 4" der Platte 4 verläuft.

Durch den gleichen Vorgang wie anhand der Figuren 3 und 4 beschrieben wird dadurch eine dicht geschlossene Kante der Platte 4 erzeugt, indem die freien Enden ihrer beiden Deckschichten 4a, b wiederum in Kontakt zueinander geraten und durch die Temperatur des Form-Werkzeuges 22 gegeneinander verschweißt werden, allerdings dabei nur eine Schrägfläche 19 an der Schmalseite 4d der dann randseitig geschlossenen Platte 4 entsteht, die sich über die gesamte Dicke der Platte 4 erstreckt.

Wenn der Zwischenwinkel zwischen den Flanken dieser V-Nut 24 etwa 45° beträgt, können derart hergestellte Platten 4 mit ihren Schrägflächen 19 gegeneinander gelegt und verklebt oder verschweißt eine rechtwinklige Eck-Formation bilden.

Solche Eck-Formationen zeigen die **Figuren 6a bis 6c****,** wovon **Figur 6b** genau die angesprochene erfindungsgemäße Lösung mit zwei mit ihren über die gesamte Dicke durchgehenden Schrägflächen 19 gegeneinandergelegte und verschweißte oder und verklebte Hohlkammer-Platten 4.1 und 4.2 betrifft.

Zusätzlich kann vor allem auf der Innenseite, ggfs. und/oder der Außenseite, der Eck-Formation eine Schweißnaht 17 oder eine Klebenaht 17 gut eingebracht werden, z.B. mittels einer Heissklebepistole 25, die geschmolzenen Kunststoff, insbesondere der Sorte der Deckschichten der Leichtbauplatten, ausgibt.

**Figur 6a** zeigt die erfindungsgemäße Verbindung zweier Leichtbauplatten, hier Hohlkammer-Platten 4.1, 4.2, die gemäß **Figuren 3a bis 3d** eine im Querschnitt halbrunde Endkante aufweisen. Wie ersichtlich entsteht durch Aneinanderlegen der beiden halbrunden Endkanten - sei es stumpf oder besser genau symmetrisch zur Winkelhalbierenden zwischen den Platten, wie dargestellt - auf der Innenseite als auch der Außenseite der Eck-Formation eine Hohlkehle, in die eine Schweißnaht 17 oder eine Klebenaht 17 gut eingebracht werden kann.

Die nicht durch die Erfindung abgedeckte Lösung der **Figur 6c** unterscheidet sich von denen der **Figuren 6a** **und b** dadurch, dass in **Figur 6c** die Eck-Formation aus nur einer einzigen Leichtbauplatte 4, hier Hohlkammer-Platte 4, hergestellt wurde.

Hierfür wurde an einer gewünschten Stelle eine in Blickrichtung der **Figur 6c** verlaufende V-Nut 24 eingearbeitet, beispielsweise für das Herstellen einer rechtwinkligen Eck-Formation mit einem Zwischenwinkel von 90° und mit der Winkelhalbierenden der V-Nut 24 lotrecht zur Hauptebene 4" dieser Platte 4.

Die V-Nut 24 wurde eingebracht wie ersichtlich bis zur Innenseite der einen Deckschicht 4a, die durchgängig erhalten bleiben sollte, und nur die andere Deckschicht 4b wurde durch die V-Nut 24 durchbrochen.

Dann kann anschließend durch ausreichendes Erwärmen der durchgehenden Deckschicht 4a im Bereich der V-Nut 24 diese biegsam gemacht werden, sodass die beiden Teile der Platte 4 beidseits der V-Nut 24 gegeneinander gebogen werden können, bis sich die freien Endkanten der beiden anderen Deckschicht-Abschnitte 4b erreichen oder annähernd erreichen.

Dann kann zwischen den angenäherten Flanken der V-Nut 24 eine Klebefläche 18 eingebracht werden und/oder zwischen den Endkanten der Deckschicht-Abschnitte 4b eine Schweißnaht 17 mittels eines Schweißwerkzeugs 25 eingebracht werden oder auch eine Klebenaht 17.

In **Figur 6c** ist ferner der eine Teil der winklig gegeneinander zu legenden Teile der Platte 4 mit gestrichelten Linien während des Biegevorganges dargestellt.

**Figur 7a** zeigt, wie zwei fluchtend miteinander an ihren Schmalseiten zu verschweißende Leichtbau-Platten in Form von Hohlkammer-Platten 4.1, 4.2, miteinander verschweißt werden:
Zum Erhitzen der Schmalseiten 4d wird meist ein elektrisch beheiztes Heizschwert zwischen die beiden Schmalseiten 4d der beiden Platten 4.1, 4.2 gestellt und diese in Kontakt mit dem heißen Heizschwert gebracht, bis die Schmalseiten 4d die für das gegenseitige verschweißen ausreichende Teig-Temperatur erreicht haben.

Anschließend kann das Heizschwert entfernt werden und die beiden Platten 4.1, 4.2 auf der gleichen Unterlage zusammengeschoben und mit ihren erhitzten Schmalseiten 4d gegeneinander gepresst werden gemäß **Figur 7b****,** wodurch eine doppelt große z.B. Wandplatte entsteht.

### BEZUGSZEICHENLISTE

- 1: Kofferaufbau
- 2: Aufbau-Hülle
- 2a: Wand
- 2b: Dach
- 2c: Boden
- 3: Innenausbau
- 4, 4.1, 4.2: Hohlkammer-Platte, Waben-Platte
- 4a, b: Deckschicht
- 4c: Kernschicht, Steg
- 4d: Schmalseite
- 5: fixes Regal
- 5a: Regal-Boden
- 6: bewegliches Regal
- 6a: Regal-Boden
- 7: Tragleiste
- 8: Zwischenwand
- 9: Radkasten
- 10: Fahrtrichtung
- 10': Längsmitte
- 11: horizontale Querrichtung
- 12: Vertikale
- 13: Trittstufe
- 14: Eckversteifung
- 15: Tür
- 15a: Türblatt
- 15a1: Türblatt-Rahmen
- 15b: Türstock
- 15c: Türscharnier
- 16: Tür
- 16a: Türblatt
- 16b: Schiebetür-Führung
- 17: Schweißnaht, Klebenaht
- 18: Klebefläche
- 19: Schrägfläche
- 20: Ausnehmung
- 20a, b: Flanke
- 21: eintauchender Bereich
- 22: Formwerkzeug
- 23: Rinne
- 23a, b: Flanke
- 24: V-Nut
- 24a, b: Flanke
- 25: Heissklebepistole
- 26: Heizschwert
- 27: Handgriff
- 28: Stützprofil
- 29: Ablageprofil
- 30: Scharnier
- 31: Regalboden-Rahmen
- 32: Tragprofil

## Patentansprüche

1. Gewichtsoptimierter **Kofferaufbau** (1) für Nutzfahrzeuge, wobei der Kofferaufbau (1) eine Aufbau-Hülle (2) und einen Innenausbau (3) umfasst, wobei
- die Aufbau-Hülle (2) Wände (2a), insbesondere auch ein Dach (2b) und/oder einen Boden (2c) umfasst, die aus Leichtbau-Platten mit äußeren Deckschichten und einer Kernschicht aus dem gleichen Material in Form von Hohlkammer-Platten (4) aus einem thermoplastischen Kunststoff bestehen,
- wobei der Innenausbau (3) zumindest teilweise aus dem gleichen PlattenMaterial wie die Aufbau-Hülle (2) besteht,
- der Innenausbau (3) so gestaltet und angeordnet ist, dass er die Stabilität der Aufbau-Hülle (2) verbessert,
- und der Kofferaufbau (1) keine Leichtmetall-Profile an Außenkanten der Aufbau-Hülle (2) aufweist,
**dadurch gekennzeichnet, dass**
bei im Winkel aneinander anschließenden Hohlkammer-Platten (4.1, 4.2)
- diese mit ihren Schmalseiten (4d) aneinandergesetzt und die jeweiligen Deckschichten (4a, b) miteinander verschweißt oder verklebt sind,
wobei
- entweder die Schmalseiten (4d) im Querschnitt betrachtet gerundet sind mit sich berührenden Deckschichten (4a, b) innerhalb einer Platte, und Schweißnähte (17) oder Klebenähte (17) in den Innenwinkel oder Außenwinkel zwischen die beiden Rundungen eingebracht sind,
- oder die Schmalseiten (4d) im Querschnitt betrachtet angeschrägt sind, sodass bei im Sollwinkel aneinanderliegenden Platten (4.1, 4.2) die Schrägflächen (19) der Schmalseiten (4d) parallel aneinanderliegen, wobei die Schrägflächen am hinsichtlich des Winkels inneren und/oder äußeren Ende der Schrägflächen miteinander verschweißt sind, und insbesondere die Schrägflächen der Platten mittels Klebeflächen (18) miteinander verklebt sind.

2. Kofferaufbau nach Anspruch 1,
wobei der Innenausbau Regale (5, 6) enthält, insbesondere
- bei fixen Regalen (5) deren Regal-Böden (5a) aus Leichtbau-Platten, insbesondere Hohlkammer-Platten (4), insbesondere den gleichen Hohlkammer-Platten wie die Wände (2a), erstellt und mit der Innenseite der Wand (2a) verschweißt oder verklebt sind, insbesondere stumpf an die Innenseite der Wand (2a) angesetzt oder in diese eingesetzt sind
und/oder
- bewegliche Regale (6) mit beweglichen, insbesondere hochklappbaren, Regal-Böden (6a), bei denen die Regalböden (6a) aus Leichtbau-Platten, insbesondere Hohlkammer-Platten (4), bestehen, die dafür notwendigen Lagerböcke (7) oder ein Lagerungs-Gestell mit den Innenseiten der Wand (2a) verklebt sind,
- insbesondere auf gegenüberliegenden Seiten angeordnete Regale (5, 6) gegeneinander verstrebt sind.

3. Kofferaufbau nach einem der vorhergehenden Ansprüche,
**dadurch gekennzeichnet, dass**
- der Innenausbau (3) Zwischenwände (8) umfasst, insbesondere vom Boden bis zur Decke durchgehende Zwischenwände (8), die mit der angrenzenden Außenwand (2a) und/oder der Dach-Platte (2b) und/oder der Boden-Platte (2c) verschweißt oder verklebt sind
und/oder
- bei an die Dach-Platte (2b) und/oder Bodenplatte (2c) und/oder Außenwand angrenzenden Teilen des Innenausbaus dessen wenigstens eine Platte formschlüssig in die Dach-Platte (2b) und/oder Bodenplatte (2c) und/oder Außenwand (2a) hineinragen,
- insbesondere diese durchdringen bis zu deren äußerer Deckschicht (4a), und die beiden Teile miteinander verschweißt oder verklebt sind,
- insbesondere die Berührungskanten der Deckschichten (4a, b) der beiden Teile miteinander verschweißt oder verklebt sind.

4. Kofferaufbau nach einem der vorhergehenden Ansprüche,
**dadurch gekennzeichnet, dass**
der Innenausbau oder die Aufbau-Hülle (2)
- Radkästen (9) umfasst
und/oder
- Trittstufen (13) an Türen umfasst.

5. Kofferaufbau nach einem der vorhergehenden Ansprüche,
**dadurch gekennzeichnet, dass**
- wenigstens eine Zugangstür (15, 16) in Rahmenbauweise hergestellt ist,
- sowohl ein Rahmen (15a1) eines Türblattes (15a, 16a) als auch ein Türstock (15b) oder bei Schiebetüren eine Schiebetür-Führung (16b) aus Leichtmetall-Profilen, insbesondere Aluminium-Profilen, bestehen,
- das Türblatt (15a, 16a) aus Leichtbau-Platten, insbesondere Hohlkammer-Platten (4), insbesondere den gleichen Hohlkammer-Platten (4) wie die Aufbau-Hülle (2), hergestellt ist
und/oder
- im Wesentlichen horizontal verlaufende Platten des Innenausbaus (3) an ihrem von der Aufbau-Hülle (2) entfernten Ende von einer mit ihrem Querschnittsprofil aufrecht stehenden Stützleiste, insbesondere aus einer Leichtbau-Platte, insbesondere Hohlkammer-Platte, abgestützt sind gegen Durchbiegen.

6. Kofferaufbau nach einem der vorhergehenden Ansprüche,
**dadurch gekennzeichnet, dass**
bei einer gewinkelten Hohlkammer-Platte
- bei auf der Außenseite des Winkels durchgehender, gebogener Deckschicht (4a) die inneren Deckschichten (4b) aneinanderstoßen und dicht miteinander verbunden, insbesondere verschweißt oder verklebt, sind
- insbesondere die Kernschichten (4c) miteinander über eine Klebefläche (18) verklebt sind.

7. Kofferaufbau nach einem der vorhergehenden Ansprüche,
**dadurch gekennzeichnet, dass**
bei in einer T-Form aneinander anschließenden Leichtbau-Platten, insbesondere Hohlkammer-Platten (4.1, 4.2)
- die eine Platte (4.1) mit ihrer rechtwinklig zu ihrer Hauptebene (4") verlaufenden Schmalseite (4d) stumpf an die durchgehende Platte (4.2) angesetzt und mit dieser zumindest hinsichtlich entlang der Enden ihrer Deckschichten (4a, b), vorzugsweise umlaufend, mit der durchgehenden Platte (4.2) verschweißt ist,
- und insbesondere ihre Kernschicht (4c) mit der Kernschicht (4c) der durchgehenden Platte (4.2) verklebt ist.

8. Kofferaufbau nach einem der vorhergehenden Ansprüche,
**dadurch gekennzeichnet, dass**
bei in einer T-Form aneinander anschließende Leichtbau-Platten, insbesondere Hohlkammer-Platten (4.1, 4.2)
- die eine Platte (4.1) in eine entsprechend gestaltete Ausnehmung (20) der durchgehenden Platte (4.2) eintaucht,
- zumindest über einen oder mehrere Teilbereiche der Länge der eintauchenden Platte (4.1), insbesondere
- mit dieser zumindest hinsichtlich entlang der Deckschichten, vorzugsweise umlaufend, mit der durchgehenden Platte verschweißt ist
und/oder
- der eintauchende Bereich (21) der einen Platte (4.1) mit den Flanken (20a, b) der Ausnehmung in der durchgehenden Platte (4.2) verklebt ist,
- insbesondere dabei die Schmalseite (4b) der eintauchenden Platte (4.1) im Querschnitt V-förmig oder Kegelstumpf-förmig gestaltet ist.

9. Kofferaufbau nach Anspruch 5, bevorzugt in Kombination mit einem der übrigen vorhergehenden Ansprüche,
**dadurch gekennzeichnet, dass**
- an dem, meist aus Leichtmetall, insbesondere Aluminium, bestehenden Türrahmen (15a1) oder den Schiebetür-Führungen (16b) außer dem entsprechenden Türblatt (15a, 16a) wenigstens ein weiteres Anbauteil, insbesondere aus Leichtmetall, befestigt ist,
- insbesondere ein in den Innenraum des Aufbaus hineinragendes Anbauteil,
- insbesondere eine Regal-Stütze (28) und/oder ein Handgriff (27),
und/oder
- bei mit ihrer Hauptebene (4") fluchtend aneinander anschließenden Leichtbau-Platten, insbesondere Hohlkammer-Platten (4.1, 4.2), (4.1, 4.2), die Platten mit ihren gesamten Schmalseiten gegeneinander verklebt oder verschweißt sind.

10. **Verfahren** zum Herstellen eines Kofferaufbaus (1) nach einem der vorhergehenden Ansprüche, wobei
- dessen Aufbau-Hülle (2) sowie zumindest ein Teil des Innenausbaus (3) des Kofferaufbaus (1) unter Verwendung von Leichtbau-Platten, in Form von Hohlkammer-Platten (4) aus einem thermoplastischen Kunststoff durch Verschweißen und/oder Verkleben zu einem einstückigen Kofferaufbau (1) zusammengefügt werden,
- unter Verzicht auf verbaute Metall-Profile zumindest entlang der AußenKanten der Aufbau-Hülle (2),
- insbesondere unter Verzicht auf verbaute Metall-Profile beim gesamten Kofferaufbau (1),
wobei zur Herstellung von im Winkel aneinander anschließenden Hohlkammer-Platten (4.1, 4.2), diese mit ihren Schmalseiten (4d) aneinandergesetzt und die Deckschichten (4a, b) miteinander verschweißt oder verklebt werden, wobei
- entweder die Schmalseiten (4d) der im Winkel aneinander angesetzten Hohlkammer-Platten (4.1, 4.2) im Querschnitt betrachtet vorher gerundet werden mit sich berührenden Deckschichten (4a, b) innerhalb einer Platte (4), und Schweißnähte (17) oder Klebenähte (17) in den Innenwinkel oder Außenwinkel zwischen die beiden Rundungen eingebracht werden,
- oder die Schmalseiten (4d) im Querschnitt betrachtet angeschrägt sind, sodass bei im Sollwinkel aneinanderliegenden Platten (4.1, 4.2) die Schrägflächen (19) der Schmalseiten (4d) parallel aneinanderliegen, wobei die Schrägflächen (19) am hinsichtlich des Winkels inneren und/oder äußeren Ende der Schrägflächen (19) miteinander verschweißt sind und insbesondere die Schrägflächen (19) der Platten (4) miteinander verklebt sind.

11. Verfahren nach Anspruch 10,
**dadurch gekennzeichnet, dass**
die Schmalseite (4d) einer Leichtbau-Platte, insbesondere Hohlkammer-Platte (4), verschlossen wird, indem
- ein aufgeheiztes Formwerkzeug (22) mit einer Rinne (23), deren Breite der Dicke der zu verschließenden Leichtbau-Platte, insbesondere Hohlkammer-Platte (4) entspricht, von der Schmalseite her in Richtung der Hauptebene (4") der Platte (4) zunehmend auf deren offene Schmalseite (4d) aufgeschoben wird oder als Formrolle entlang dieser gerollt wird, wodurch sich die Deckschichten (4a, b) erwärmen und entsprechend der Kontur der Flanken (23a, b) der Rinne (23) gebogen werden,
- bis sich die freien Endkanten der Deckschichten (4a, b) der Hohlkammer-Platte am Boden der Rinne (23) berühren und durch die entsprechend hohe Temperatur des Form-Werkzeuges (2) miteinander verschweißt werden.

12. Verfahren nach einem der vorhergehenden Verfahrensansprüche, **dadurch gekennzeichnet, dass**
zum Herstellen einer gewinkelten Leichtbau-Platte, insbesondere Hohlkammer-Platte (4)
- eine Hohlkammer-Platte (4) nach Einbringen einer V-Nut (24), die vor der gegenüberliegenden Deckschicht (4a) endet und insbesondere durch spanenden Materialabtrag oder Wärmeeinwirkung hergestellt ist, um die verbleibende durchgehende Deckschicht (4a) entlang der V-Nut (24), vorzugsweise im erwärmten, Zustand herumgebogen wird, und die sich berührenden Nut-Ränder verschweißt oder verklebt werden zu einer gewinkelten Hohlkammer-Platte (4).

13. Verfahren nach einem der vorhergehenden Verfahrensansprüche, **dadurch gekennzeichnet, dass**
zur Herstellung von in T-Form aneinander anschließenden Leichtbau-Platten, insbesondere Hohlkammer-Platten (4.1, 4.2)
- die endende Platte (4.1) in eine entsprechend gestaltete Ausnehmung (20) der durchgehenden Platte (4.2) eingesteckt wird,
- zumindest über einen oder mehrere Teilbereiche der Länge der eintauchenden, endenden Platte (4.1), insbesondere
- mit dieser zumindest hinsichtlich entlang der Deckschichten (4a, b), vorzugsweise umlaufend, mit der durchgehenden Platte (4.2) verschweißt wird
und/oder
- der eintauchende Bereich (21) der endenden Platte (4.1) mit den Flanken (20a, b) der Ausnehmung (20) in der durchgehenden Platte (4.2) verklebt wird, wobei
- vorher die Schmalseite der eintauchenden Platte (4.1) im Querschnitt V-förmig oder Kegelstumpf-förmig gestaltet wird.

## Claims

1. Weight-optimised box body (1) for commercial vehicles, wherein the box body (1) comprises a body shell (2) and an interior structure (3), wherein
- the body shell (2) comprises walls (2a), in particular also a roof (2b) and/or a floor (2c), which consist of lightweight panels with outer cover layers and a core layer made of the same material in the form of hollow chamber panels (4) made of a thermoplastic material,
- wherein the interior structure (3) consists at least partially of the same panel material as the body shell (2),
- the interior structure (3) is designed and arranged in such a way that they improve the stability of the body shell (2),
- and the box body (1) has no light metal profiles on the outer edges of the body shell (2),
**characterised in that**
for hollow chamber panels (4.1, 4.2) connected to one another at an angle,
- these are placed together with their narrow sides (4d) and the respective cover layers (4a, b) are welded or glued together,
wherein
- either the narrow sides (4d) are rounded when viewed in cross section with contacting cover layers (4a, b) within a panel, and weld seams (17) or adhesive seams (17) are introduced into the inner angle or outer angle between the two curves,
- or the narrow sides (4d) are chamfered when viewed in cross section, so that the chamfered surfaces (19) of the narrow sides (4d) are parallel to one another when the panels (4.1, 4.2) are positioned at the nominal angle, wherein the chamfered surfaces are welded together at the inner and/or outer end of the chamfered surfaces with respect to the angle, and in particular the chamfered surfaces of the panels are glued together by means of adhesive surfaces (18).

2. Box body according to claim 1,
wherein the interior structure contains shelves (5, 6), in particular
- in the case of fixed shelves (5), the shelves (5a) of which are made of lightweight panels, in particular hollow chamber panels (4), in particular the same hollow chamber panels as the walls (2a), and are welded or glued to the inner side of the wall (2a), in particular are butt-jointed to the inner side of the wall (2a) or inserted into it,
and/or
- movable shelves (6) with movable, in particular upwards foldable, shelf floors (6a), in which the shelf floors (6a) consist of lightweight panels, in particular hollow chamber panels (4), the necessary bearing blocks (7) or a storage frame are glued to the inner sides of the wall (2a),
- in particular shelves (5, 6) arranged on opposite sides are braced against one another.

3. Box body according to any of the preceding claims,
**characterised in that**
- the interior structure (3) comprises partition walls (8), in particular continuous partition walls (8) extending from floor to ceiling, which walls are welded or glued to the adjacent external wall (2a) and/or the roof panel (2b) and/or the floor panel (2c),
and/or
- in the case of parts of the interior structure adjacent to the roof panel (2b) and/or floor panel (2c) and/or external wall, at least one panel of which protrudes in a form-fitting manner into the roof panel (2b) and/or floor panel (2c) and/or external wall (2a),
- in particular penetrate therethrough up to the outer cover layer (4a) thereof, and the two parts are welded or glued together,
- in particular the contact edges of the cover layers (4a, b) of the two parts are welded or glued together.

4. Box body according to any of the preceding claims,
**characterised in that**
the interior structure or the body shell (2)
- comprises wheel arches (9)
and/or
- comprises stepping steps (13) on doors.

5. Box body according to any of the preceding claims,
**characterised in that**
- at least one access door (15, 16) is made of frame construction,
- both a frame (15a1) of a door leaf (15a, 16a) and a door frame (15b) or, in the case of sliding doors, a sliding door guide (16b) consist of light metal profiles, in particular aluminium profiles,
- the door leaf (15a, 16a) is made of lightweight panels, in particular hollow chamber panels (4), in particular the same hollow chamber panels (4) as the body shell (2),
and/or
- substantially horizontally running panels of the interior structure (3) are supported against bending at their end remote from the body shell (2) by a support strip with an upright cross-sectional profile, in particular made of a lightweight panel, in particular a hollow chamber panel.

6. Box body according to any of the preceding claims,
**characterised in that**
with an angled hollow chamber panel,
- in the case of a continuous, curved cover layer (4a) on the outer side of the angle, the inner cover layers (4b) abut one another and are tightly connected to one another, in particular welded or glued,
- in particular the core layers (4c) are glued to one another via an adhesive surface (18).

7. Box body according to any of the preceding claims,
**characterised in that**
for lightweight panels, in particular hollow chamber panels (4.1, 4.2), connected to one another in a T-shape,
- one panel (4.1) is butt-jointed with its narrow side (4d) running at right angles to its main plane (4") to the continuous panel (4.2) and is welded to the continuous panel (4.2) at least along the ends of the cover layers (4a, b) thereof, preferably all the way around,
- and in particular the core layer (4c) thereof is glued to the core layer (4c) of the continuous panel (4.2).

8. Box body according to any of the preceding claims,
**characterised in that**
for lightweight panels, in particular hollow chamber panels (4.1, 4.2), connected to one another in a T-shape,
- the one a panel (4.1) immerses itself into a correspondingly designed recess (20) of the continuous panel (4.2),
- is welded at least over one or more partial regions of the length of the immersed panel (4.1), in particular
- is welded to the continuous panel at least along the cover layers, preferably all the way around, and/or
- the immersed region (21) of one panel (4.1) is glued to the flanks (20a, b) of the recess in the continuous panel (4.2),
- in particular the narrow side (4b) of the immersed panel (4.1) is V-shaped or truncated cone-shaped in cross section.

9. Box body according to claim 5, preferably in combination with one of the other preceding claims,
**characterised in that**
- at least one further attachment part, in particular made of light metal, is attached to the door frame (15a1), which is usually made of light metal, in particular aluminium, or to the sliding door guides (16b) in addition to the corresponding door leaf (15a, 16a),
- in particular an attachment part protruding into the interior of the body,
- in particular a shelf support (28) and/or a handle (27), and/or
- in the case of lightweight panels which are connected flush with one another with their main plane (4"), in particular hollow chamber panels (4.1, 4.2), (4.1, 4.2), the panels are glued or welded to one another with their entire narrow sides.

10. **Method** for producing a box body (1) according to any of the preceding claims, wherein
- the body shell (2) thereof and at least part of the interior structure (3) of the box body (1) are assembled into a one-piece box body (1) using lightweight panels in the form of hollow chamber panels (4) made of a thermoplastic material by welding and/or gluing,
- by dispensing with installed metal profiles at least along the outer edges of the body shell (2),
- in particular by dispensing with installed metal profiles in the entire box body (1),
wherein, for the production of hollow chamber panels (4.1, 4.2) connected to one another at an angle, these are placed together with their narrow sides (4d) and the cover layers (4a, b) are welded or glued together, wherein
- either the narrow sides (4d) of the hollow chamber panels (4.1, 4.2) which are placed at an angle to one another are rounded beforehand when viewed in cross section with contacting cover layers (4a, b) within a panel (4), and weld seams (17) or adhesive seams (17) are introduced into the inner angle or outer angle between the two curves,
- or the narrow sides (4d) are chamfered when viewed in cross section, so that the chamfered surfaces (19) of the narrow sides (4d) are parallel to one another when the panels (4.1, 4.2) are positioned at the nominal angle, wherein the chamfered surfaces (19) are welded to one another at the inner and/or outer end of the chamfered surfaces (19) with respect to the angle, and in particular the chamfered surfaces (19) of the panels (4) are glued to one another.

11. Method according to claim 10,
**characterised in that**
the narrow side (4d) of a lightweight panel, in particular a hollow chamber panel (4), is closed **in that**
- a heated forming tool (22) with a channel (23), the width of which corresponds to the thickness of the lightweight panel, in particular the hollow chamber panel (4), to be closed, is pushed from the narrow side in the direction of the main plane (4") of the panel (4) onto the open narrow side (4d) thereof or is rolled along it as a forming roll, whereby the cover layers (4a, b) are heated and bent according to the contour of the flanks (23a, b) of the channel (23),
- until the free end edges of the cover layers (4a, b) of the hollow chamber panel touch the bottom of the channel (23) and are welded together by the correspondingly high temperature of the forming tool (2).

12. Method according to any of the preceding claims,
**characterised in that**
for producing an angled lightweight panel, in particular a hollow chamber panel (4),
- a hollow chamber panel (4) is bent around after introducing a V-groove (24) which ends before the opposite cover layer (4a) and is produced in particular by machining material removal or heat exposure in order to form the remaining continuous cover layer (4a) along the V-groove (24),
preferably in a heated state, and the touching groove edges are welded or glued to form an angled hollow chamber panel (4).

13. Method according to any of the preceding claims,
**characterised in that**
for the production of lightweight panels, in particular hollow chamber panels (4.1, 4.2), connected to one another in a T-shape,
- the ending panel (4.1) is inserted into a correspondingly designed recess (20) of the continuous panel (4.2),
- at least over one or more partial regions of the length of the immersed, ending panel (4.1), in particular
- is welded to the continuous panel (4.2) at least along the cover layers (4a, b), preferably all the way around,
and/or
- the immersed region (21) of the ending panel (4.1) is glued to the flanks (20a, b) of the recess (20) in the continuous panel (4.2), wherein
- the narrow side of the immersed panel (4.1) is previously designed to be V-shaped or truncated cone-shaped in cross section.

## Revendications

1. **Carrosserie de coffre** (1) de poids optimisé pour véhicules utilitaires, dans lequel la carrosserie de coffre (1) comprend une enveloppe de coffre (2) et un aménagement intérieur (3), dans lequel
- l'enveloppe de coffre (2) comprend des parois (2a), en particulier également un toit (2b) et/ou un plancher (2c), qui se composent de panneaux légers avec des couches de recouvrement extérieures et une couche centrale du même matériau sous la forme de panneaux alvéolaires (4) en matière thermoplastique,
- dans lequel l'aménagement intérieur (3) est constitué au moins partiellement du même matériau de panneau que l'enveloppe de coffre (2),
- l'aménagement intérieur (3) est conçu et disposé de manière à améliorer la stabilité de l'enveloppe de coffre (2),
- et la carrosserie de coffre (1) ne présente pas de profilés en métal léger sur les bords extérieurs de l'enveloppe de coffre (2),
**caractérisé en ce que,**
dans le cas de panneaux alvéolaires (4.1, 4.2) se raccordant l'une à l'autre selon un angle
- celles-ci sont placées l'une contre l'autre par leurs petits côtés (4d) et les couches de recouvrement respectives (4a, b) sont soudées ou collées l'une à l'autre,
dans lequel
- soit les petits côtés (4d), vus en coupe transversale, sont arrondis avec des couches de recouvrement (4a, b) se touchant à l'intérieur d'un panneau, et des cordons de soudure (17) ou des cordons de collage (17) sont réalisés dans l'angle intérieur ou l'angle extérieur entre les deux arrondis,
- soit les petits côtés (4d) sont biseautés, vus en coupe transversale, de sorte que, lorsque les panneaux (4.1, 4.2) sont placés l'un contre l'autre selon l'angle théorique, les surfaces inclinées (19) des petits côtés (4d) sont parallèles l'une à l'autre, dans lequel les surfaces inclinées sont soudées l'une à l'autre à l'extrémité intérieure et/ou extérieure des surfaces inclinées par rapport à l'angle, et en particulier les surfaces inclinées des panneaux sont collées l'une à l'autre au moyen de surfaces adhésives (18).

2. Carrosserie de coffre selon la revendication 1, dans lequel l'aménagement intérieur comprend des étagères (5, 6), en particulier
- dans le cas d'étagères fixes (5), leurs fonds d'étagère (5a) sont réalisés à partir de panneaux légers, en particulier de panneaux alvéolaires (4), notamment les mêmes panneaux alvéolaires que les parois (2a), et sont soudés ou collés à la face intérieure de la paroi (2a), en particulier sont appliqués bord à bord contre la face intérieure de la paroi (2a) ou sont insérés dans celle-ci
et/ou
- des étagères mobiles (6) avec des fonds d'étagère mobiles (6a), en particulier relevables, dans lesquels les fonds d'étagère (6a) sont constituées de panneaux légers, en particulier de panneaux alvéolaires (4), les supports de stockage (7) nécessaires à cet effet ou un châssis de stockage sont collés aux faces intérieures de la paroi (2a),
- en particulier, les étagères (5, 6) disposées sur des côtés opposés sont entretoisées les unes par rapport aux autres.

3. Carrosserie de coffre selon l'une des revendications précédentes,
**caractérisée en ce que**
- l'aménagement intérieur (3) comprend des parois intermédiaires (8), en particulier des parois intermédiaires (8) continues du sol au plafond, qui sont soudées ou collées à la paroi extérieure (2a) adjacente et/ou au panneau de toit (2b) et/ou au panneau de plancher (2c)
et/ou
- dans le cas de parties de l'aménagement intérieur adjacentes au panneau de toit (2b) et/ou au panneau de plancher (2c) et/ou à la paroi extérieure, au moins un panneau de l'aménagement intérieur pénètre par complémentarité de forme dans le panneau de toit (2b) et/ou le panneau de plancher (2c) et/ou la paroi extérieure (2a),
- notamment en la traversant jusqu'à sa couche de recouvrement extérieure (4a), et les deux parties sont soudées ou collées entre elles,
- notamment les bords de contact des couches de recouvrement (4a, b) des deux parties sont soudées ou collées entre elles.

4. Carrosserie de coffre selon l'une des revendications précédentes,
**caractérisée en ce que**
l'aménagement intérieur ou l'enveloppe de coffre (2)
- comprend des montants de roue (9)
et/ou
- des marchepieds (13) sur des portes.

5. Carrosserie de coffre selon l'une des revendications précédentes,
**caractérisée en ce que**
- au moins une porte d'accès (15, 16) est fabriquée sous forme de cadre,
- aussi bien un cadre (15a1) d'un panneau de porte (15a, 16a) qu'un montant de porte (15b) ou, dans le cas de portes coulissantes, un guide de porte coulissante (16b) sont constitués de profilés en métal léger, en particulier de profilés en aluminium,
- le panneau de porte (15a, 16a) est fabriqué à partir de panneaux légers, en particulier de panneaux alvéolaires (4), notamment les mêmes panneaux alvéolaires (4) que l'enveloppe de coffre (2)
et/ou
- des panneaux de l'aménagement intérieur (3) s'étendant essentiellement à l'horizontale sont, à leur extrémité opposée à l'enveloppe, soutenus contre la flexion par une barre d'appui dont le profil de section transversale est vertical, en particulier en un panneau léger, en particulier un panneau alvéolaire.

6. Carrosserie de coffre selon l'une des revendications précédentes,
**caractérisée en ce que**
dans le cas d'un panneau alvéolaire coudé,
- lorsque la couche de recouvrement (4a) est continue et courbée sur le côté extérieur de l'angle, les couches de recouvrement intérieures (4b) se touchent et sont reliées entre elles de manière étanche, en particulier soudées ou collées,
- en particulier les couches centrales (4c) sont collées entre elles par l'intermédiaire d'une surface adhésive (18).

7. Carrosserie de coffre selon l'une des revendications précédentes,
**caractérisée en ce que,**
dans le cas de panneaux légers se raccordant les uns aux autres en forme de T, en particulier de panneaux alvéolaires (4.1, 4.2)
- l'un des panneaux (4.1) est appliqué bout à bout contre le panneau continu (4.2) par son petit côté (4d) perpendiculaire à son plan principal (4") et est soudé à ce dernier au moins en ce qui concerne les extrémités de ses couches de recouvrement (4a, b), de préférence de manière circonférentielle, au panneau continu (4.2),
- et en particulier sa couche centrale (4c) est collée à la couche centrale (4c) du panneau continu (4.2).

8. Carrosserie de coffre selon l'une des revendications précédentes,
**caractérisée en ce que,**
dans le cas de panneaux légers se raccordant les uns aux autres en forme de T, en particulier de panneaux alvéolaires (4.1, 4.2)
- l'un des panneaux (4.1) s'enfonce dans un évidement (20) de forme correspondante du panneau continu (4.2),
- au moins sur une ou plusieurs zones partielles de la longueur du panneau plongeant (4.1), en particulier
- est soudée au panneau continu au moins en ce qui concerne les couches de recouvrement, de préférence sur tout le pourtour de celle-ci
et/ou
- la zone plongeante (21) d'un panneau (4.1) est collée aux flancs (20a, b) de l'évidement dans le panneau continu (4.2),
- en particulier, le petit côté (4b) du panneau plongeant (4.1) y a une section en forme de V ou de cône tronqué.

9. Carrosserie de coffre selon la revendication 5, de préférence en combinaison avec l'une des autres revendications précédentes,
**caractérisée en ce que**
- au moins une autre pièce rapportée, notamment en métal léger, est fixée sur le cadre de porte (15a1), généralement en métal léger, notamment en aluminium, ou sur les guides de porte coulissante (16b), en plus du panneau de porte correspondant (15a, 16a),
- en particulier une pièce rapportée pénétrant dans l'espace intérieur de la carrosserie,
- notamment un support d'étagère (28) et/ou une poignée (27),
et/ou
- dans le cas de panneaux légers se raccordant les uns aux autres en étant alignés avec leur plan principal (4"), en particulier de panneaux alvéolaires (4.1, 4.2), (4.1, 4.2), les panneaux sont collés ou soudés les uns aux autres par l'ensemble de leurs petits côtés.

10. **Procédé de fabrication** d'une carrosserie de coffre (1) selon l'une des revendications précédentes, dans lequel
- l'enveloppe de coffre (2) ainsi qu'au moins une partie de l'aménagement intérieur (3) de la carrosserie de coffre (1) sont assemblées par soudage et/ou collage en utilisant des panneaux légers, sous forme de panneaux alvéolaires (4) en matière thermoplastique, pour former une carrosserie de coffre (1) d'une seule pièce,
- en renonçant à des profilés métalliques incorporés au moins le long des bords extérieurs de l'enveloppe de coffre (2),
- en particulier en renonçant à des profilés métalliques pour l'ensemble de la carrosserie de coffre (1),
dans lequel, pour la fabrication de panneaux alvéolaires (4.1, 4.2) se raccordant l'une à l'autre en formant un angle, celles-ci sont placées l'une contre l'autre par leurs petits côtés (4d) et les couches de recouvrement (4a, b) sont soudées ou collées l'une à l'autre, dans lequel
- soit les petits côtés (4d) des panneaux alvéolaires (4.1, 4.2) appliquées l'une contre l'autre en formant un angle sont préalablement arrondis, vu en coupe transversale, avec des couches de recouvrement (4a, b) se touchant à l'intérieur d'un panneau (4), et des cordons de soudure (17) ou des cordons de collage (17) sont réalisés dans l'angle intérieur ou l'angle extérieur entre les deux arrondis,
- soit les petits côtés (4d) sont biseautés, vus en coupe transversale, de sorte que, lorsque les panneaux (4.1, 4.2) sont placées l'une contre l'autre selon l'angle théorique, les surfaces inclinées (19) des petits côtés (4d) sont placées parallèlement l'une contre l'autre, les surfaces inclinées (19) étant soudées l'une à l'autre à l'extrémité intérieure et/ou extérieure des surfaces inclinées (19) par rapport à l'angle, et en particulier les surfaces inclinées (19) des panneaux (4) étant collées l'une à l'autre.

11. Procédé selon la revendication 10,
**caractérisé en ce que**
le petit côté (4d) d'un panneau léger, notamment d'un panneau alvéolaire (4), est fermé **en ce que**
- un outil de formage (22) chauffé avec une rainure (23) dont la largeur correspond à l'épaisseur du panneau léger à fermer, en particulier du panneau alvéolaire (4), est glissé depuis le petit côté en direction du plan principal (4") du panneau (4) de plus en plus sur son petit côté ouvert (4d) ou est roulé comme un rouleau de formage le long de celui-ci, ce qui fait que les couches de recouvrement (4a, b) s'échauffent et sont pliées conformément au contour des flancs (23a, b) de la rainure (23),
- jusqu'à ce que les bords d'extrémité libres des couches de recouvrement (4a, b) du panneau alvéolaire se touchent au fond de la rainure (23) et soient soudés entre eux par la température élevée correspondante de l'outil de formage (2).

12. Procédé selon l'une des revendications précédentes,
**caractérisé en ce que,**
pour la fabrication d'un panneau léger coudé, en particulier d'un panneau alvéolaire (4)
- un panneau alvéolaire (4), après avoir réalisé une rainure en V (24) qui se termine avant la couche de recouvrement (4a) opposée et qui est réalisée en particulier par enlèvement de matière ou sous l'effet de la chaleur, est enroulé autour de la couche de recouvrement (4a) continue restante le long de la rainure en V (24), de préférence à l'état chauffé, et les bords de la rainure qui se touchent sont soudés ou collés pour former un panneau alvéolaire (4) coudé.

13. Procédé selon l'une des revendications précédentes,
**caractérisé en ce que,**
pour la fabrication de panneaux légers se raccordant les uns aux autres en forme de T, en particulier de panneaux alvéolaires (4.1, 4.2)
- le panneau d'extrémité (4.1) est inséré dans un évidement (20) de forme correspondante du panneau continu (4.2),
- au moins sur une ou plusieurs zones partielles de la longueur du panneau d'extrémité plongeant (4.1), en particulier
- est soudée au panneau continu (4.2) au moins en ce qui concerne les couches de recouvrement (4a, b), de préférence sur tout le pourtour de celle-ci
et/ou
- la zone plongeante (21) du panneau d'extrémité (4.1) est collée aux flancs (20a, b) de l'évidement (20) dans le panneau continu (4.2), dans lequel
- le côté étroit du panneau plongeant (4.1) est auparavant configuré en forme de V ou de cône tronqué en section transversale.
